(19) Europäisches Patentamt

European Patent Office

Office européen des brevets

(11) **EP 1 513 000 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(51) Int Cl.:
***G02B 27/01*** *(2006.01)*

(21) Anmeldenummer: **03019980.6**

(22) Anmeldetag: **03.09.2003**

(54) **HMD-Vorrichtung (Head Mounted Display) mit einer eine asphärische Fläche aufweisenden Abbildungsoptik**

Head mounted display comprising imaging optics with aspheric surface

Viseur porté sur la tête avec système optique de reproduction comprenant une surface asphérique

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**09.03.2005 Patentblatt 2005/10**

(73) Patentinhaber:
• **Carl Zeiss**
**89518 Heidenheim (Brenz) (DE)**
Benannte Vertragsstaaten:
**AT BE BG CH CY CZ DE DK EE ES FI FR GR HU IT LI LU MC NL PT RO SE SI SK TR**
• **Carl Zeiss Stiftung**
**89518 Heidenheim (DE)**
Benannte Vertragsstaaten:
**GB IE**

(72) Erfinder: **Achtner, Bertram**
**D-73525 Schwäbisch Gmünd (DE)**

(74) Vertreter: **Geyer, Fehners & Partner**
**Patentanwälte**
**Perhamerstraße 31**
**80687 München (DE)**

(56) Entgegenhaltungen:
**WO-A-98/18038        US-A- 6 055 110**
**US-B1- 6 349 004**

• **SMITH W J: "MODERN OPTICAL ENGINEERING" 2000 , MC GRAW - HILL BOOK COMPANY, NEW YORK, NY, US, 3RD ED., PAGE(S) 413-417,429-430 XP002263139 * Seite 415, letzter Absatz - Seite 417, Absatz 1 * * Seite 430, Absatz 1 ***

**Beschreibung**

Die Erfindung betrifft eine HMD-Vorrichtung (Head mounted display — Vorrichtung) mit einem Bildelement zum Erzeugen eines Bildes und einer Abbildungsoptik, die das Bild so abbildet, daß es von einem die HMD-Vorrichtung tragenden Benutzer wahrnehmbar ist, wobei die Abbildungsoptik eine erste Optikgruppe mit einer ersten Linse, die negative Brechkraft aufweist, und einer zweiten Linse, die positive Brechkraft aufweist, ein der ersten Optikgruppe nachgeordnetes Umlenkelement sowie eine dem Umlenkelement folgende zweite Optikgruppe mit einer dritten Linse aufweist.

Eine solche HMD-Vorrichtung ist aus der WO 98/18038 bekannt. Schwierigkeiten bestehen bei einer solchen bekannten HMD-Vorrichtung darin, daß die Austrittspupille der Abbildungsoptik so liegen muß, daß an diese Stelle der die HMD-Vorrichtung tragende Benutzer sein Auge bringen kann, wobei gleichzeitig der Durchmesser der Austrittpupille so groß sein muß, daß auch bei Augenbewegungen der Benutzer das gesamte Bild wahrnehmen kann. So sollte der Durchmesser der Austrittspupille mindestens 8mm betragen und gleichzeitig ein Feld der Größe von 25° zur Verfügung gestellt werden, wobei über dieses Feld und über die Austrittspupille eine gute optische Bildqualität realisiert werden sollte. Solche Anforderungen können durch das Vorsehen von zusätzlichen Linsen erfüllt werden. Eine Erhöhung der Linsenanzahl ist jedoch nachteilig mit einer Gewichts- und Größenerhöhung verbunden.

Ausgehend hiervon ist es Aufgabe der Erfindung, eine HMD-Vorrichtung der eingangs genannten Art so weiter zu bilden, daß eine ausgezeichnete Abbildungsqualität bei gleichzeitig kleinen Abmessungen und geringem Gewicht realisiert werden kann.

Erfindungsgemäß wird die Aufgabe mit einer HMD-Vorrichtung der eingangs genannten Art dadurch gelöst, daß zur Korrektur von Astigmatismus und Verzeichnung mindestens eine Fläche der Flächen der ersten und zweiten Linse asphärisch ausgebildet ist und zur Korrektur des Öffnungsfehlers mindestens eine Fläche der dritten Linse asphärisch ausgebildet ist.

Das Vorsehen einer asphärischen Fläche in der ersten Optikgruppe und einer asphärischen Fläche in der zweiten Optikgruppe ist dahingehend vorteilhaft, daß dadurch mittels der ersten Optikgruppe hauptsächlich die Korrektur von Astigmatismus und Verzeichnung realisiert werden kann und mittels der zweiten Optikgruppe hauptsächlich die Korrektur des Öffnungsfehlers durchgeführt wird. Damit wird die Korrektur der unterschiedlichen Abbildungsfehler auf die beiden Optikgruppen aufgeteilt, wodurch vorteilhaft eine ausgezeichnete Korrektur und somit eine ausgezeichnete optische Bildqualität für den Betrachter erreicht wird. Bei einem Aperturdurchmesser von 8mm und einer Feldgröße von 25° ist es möglich, für den Öffnungsfehler eine Korrektur von besser als $\pm$ 0,25 dpt, für den Astigmatismus eine Korrektur von besser als $\pm$ 0,25 dpt und für die Verzeichnung eine Korrektur besser als $\pm$ 5% zu realisieren.

Bei einer vorteilhaften Weiterbildung der erfindungsgemäßen HMD-Vorrichtung ist zur Korrektur der Bildfeldkrümmung die erste Linse näher an einer Bildebene, in der das erzeugte Bild liegt, als die zweite Linse und liegt ferner näher an der Bildebene als am Umlenkelement. Damit läßt sich ein sehr kurzer Abstand der ersten Linse zum erzeugten Bild realisieren, wodurch eine ausgezeichnete Korrektur der Bildfeldkrümmung erreicht wird.

Bei der erfindungsgemäßen HMD-Vorrichtung kann zur Korrektur der Farbquerfehlers das Material der ersten Linse eine höhere Dispersion aufweisen als das Material der zweiten Linse. Da die erste Optikgruppe zwischen dem Umlenkelement und der Bildebene angeordnet ist, ist die erste Optikgruppe relativ nah am Bild (im Vergleich zur zweiten Optikgruppe), wodurch eine ausgezeichnete Korrektur des Farbquerfehlers erreicht werden kann.

Eine besonders bevorzugte Ausgestaltung der erfindungsgemäßen HMD-Vorrichtung besteht darin, daß zur Korrektur des Farblängsfehlers die zweite Optikgruppe eine diffräktive Fläche aufweist und/oder einen Achromaten. Da die zweite Optikgruppe näher an der Austrittspupille der Abbildungsoptik liegt als die erste Optikgruppe, läßt sich eine sehr gute Korrektur des Farblängsfehlers realisieren.

Das Vorsehen einer diffraktiven Fläche in der zweiten Optikgruppe zur Korrektur des Farblängsfehlers führt zu dem Vorteil, daß dadurch keine zusätzlichen Optikelemente vorgesehen werden müssen. So kann die diffraktive Fläche auf einer Fläche der dritten Linse, insbesondere auf der asphärischen Fläche der dritten Linse ausgebildet werden. Natürlich ist es auch möglich, die diffraktive Fläche als Planfläche auszubilden, die auf einer dünnen planparallelen Platte vorgesehen ist oder, falls als Umlenkelement ein Umlenkprisma vorgesehen wird, auf der der zweiten Optikgruppe zugewandten Seite des Umlenkprismas ausgebildet ist.

Die erfindungsgemäße HMD-Vorrichtung kann dadurch weitergebildet werden, daß zur Korrektur von Astigmatismus und Verzeichnung sowohl eine Fläche der ersten Linse als auch eine Fläche der zweiten Linse asphärisch ausgebildet ist. Durch das Vorsehen von zwei asphärischen Flächen in der ersten Optikgruppe ist eine weitere Verbesserung der Abbildungsqualität, insbesondere im Hinblick auf die Korrektur von Astigmatismus und Verzeichnung, möglich.

Eine vorteilhafte Weiterbildung der erfindungsgemäßen HMD-Vorrichtung besteht darin, daß die zweite und dritte Linse identisch ausgebildet sind. Dadurch wird die Anzahl der unterschiedlichen Optikelemente reduziert, wodurch die Herstellungskosten verringert werden können.

Die zweite und dritte Linse können so angeordnet werden, daß sie zueinander entlang der optischen Achse nur verschoben sind oder auch noch zueinander gespiegelt angeordnet sind.

Bei der erfindungsgemäßen HMD-Vorrichtung kann das Umlenkelement eine Faltung des Strahlengangs mittels einer einzigen Reflexion um 70° - 110°, bevorzugt 90° bewirken. Dies führt zu einer äußerst kompakten Abbildungsoptik, wodurch auch die HMD-Vorrichtung klein und kompakt ausgebildet werden kann. Als Umlenkelement kann beispielsweise ein Umlenkprisma verwendet werden. Dies führt zu dem Vorteil, daß im Vergleich zu einem Umlenkspiegel als Umlenkelement das Prisma kleiner ausgebildet werden kann, um die gleiche optische Weglänge zur Verfügung zu stellen (aufgrund der Brechzahl von größer als 1 des Prismenmaterials). Dies führt zu einer kompakteren und leichteren Anordnung.

Die Verwendung eines Umlenkspiegels als Umlenkelement führt zu dem Vorteil, daß ein solcher Umlenkspiegel äußerst kostengünstig mit der erforderlichen Genauigkeit hergestellt werden kann, wodurch die Herstellkosten der erfindungsgemäßen HMD-Vorrichtung reduziert werden können.

Die erfindungsgemäße HMD-Vorrichtung kann dadurch weitergebildet werden, daß alle optischen Flächen der beiden Optikgruppen rotationssymmetrisch und bezüglich der optischen Achse der Abbildungsoptik zentriert sind. Damit wird eine kompakte Abbildungsoptik mit ausgezeichneten Abbildungseigenschaften zur Verfügung gestellt. Insbesondere können alle Linsen der beiden Optikgruppen aus Kunststoff gebildet sein, wodurch das Gewicht der Abbildungsoptik sehr gering gehalten werden kann.

Die zweite Optikgruppe weist bevorzugt positive Brechkraft auf. Dadurch kann die HMD-Vorrichtung kompakt gebildet werden.

Insbesondere ist die HMD-Vorrichtung so ausgebildet, daß nur das erzeugte Bild für den Betrachter wahrnehmbar ist. Alternativ kann die HMD-Vorrichtung für eine augmentierte Darstellung ausgebildet sein, bei der der Betrachter das erzeugte Bild in Überlagerung mit der Umgebung wahrnimmt. In diesem Fall läuft das Umgebungslicht bevorzugt durch das Umlenkelement und die zweite Optikgruppe (und nicht durch die erste Optikgruppe). Es kann vor dem Umlenkelement auch noch eine dritte Optikgruppe angeordnet werden, durch die das Umgebungslicht läuft, bevor es durch das Umlenkelement und die zweite Optikgruppe läuft.

Die Abbildungsoptik erzeugt bevorzugt ein virtuelles Bild des mittels des Bildelements erzeugten Bildes, wobei insbesondere eine Abbildung nach Unendlich möglich ist.

Die Austrittspupille der Abbildungsoptik liegt hinter der zweiten Optikgruppe (also in Luft), so daß der Betrachter bei aufgesetzter HMD-Vorrichtung problemlos sein Auge an den Ort der Austrittspupille bringen kann.

Die erfindungsgemäße HMD-Vorrichtung kann natürlich noch eine Ansteuereinheit zur Ansteuerung des Bildelements anhand vorgegebener Bilddaten enthalten, wobei das Bildelement entweder ein selbstleuchtendes Bildelement, wie z.B. ein OLED (organisches LED), oder ein nicht selbstleuchtendes Bildelement sein kann, das reflektiv oder transmissiv ausgebildet sein kann (z.B. LCD-Modul, Kippspiegelmatrix). Die Bildebene, in der das Bild erzeugt wird, kann durch das Bildelement selbst gegeben sein oder vom Bildelement beabstandet sein. Im letzteren Fall kann eine Zwischenabbildungsoptik zwischen dem Bildelement und der Bildebene angeordnet sein. Weiter kann die erfindungsgemäße HMD-Vorrichtung noch geeignete Haltevorrichtung bzw. ein geeignetes Gestell aufweisen, mit dem sie auf dem Kopf des Benutzers aufgesetzt werden kann. Dieses Gestell kann ähnlich zu einem Brillengestell ausgebildet sein. Natürlich kann die HMD-Vorrichtung sowohl zur Bilddarstellung für ein Auge als auch für beide Augen ausgebildet werden und das Bildelement kann einfarbige oder mehrfarbige Bilder erzeugen.

Die Erfindung ist in den angehängten Ansprüchen definiert und wird beispielshalber anhand der Figuren noch näher erläutert. Von den Figuren zeigen:

Fig. 1   eine schematische Darstellung der erfindungsgemäßen HMD-Vorrichtung;
Fig. 2   einen Linsenschnitt der Abbildungsoptik der HMD-Vorrichtung von Fig. 1 gemäß einer ersten Ausführungsform;
Fig. 3   einen Linsenschnitt der Abbildungsoptik der HMD-Vorrichtung von Fig. 1 gemäß einer zweiten Ausführungsform;
Fig. 4   einen Linsenschnitt der Abbildungsoptik der HMD-Vorrichtung von Fig. 1 gemäß einer dritten Ausführungsform;
Fig. 5   einen Linsenschnitt der Abbildungsoptik der HMD-Vorrichtung von Fig.1 gemäß einer vierten Ausführungsform;
Fig. 6   einen Linsenschnitt der Abbildungsoptik der HMD-Vorrichtung von Fig. 1 gemäß einer fünften Ausführungsform.

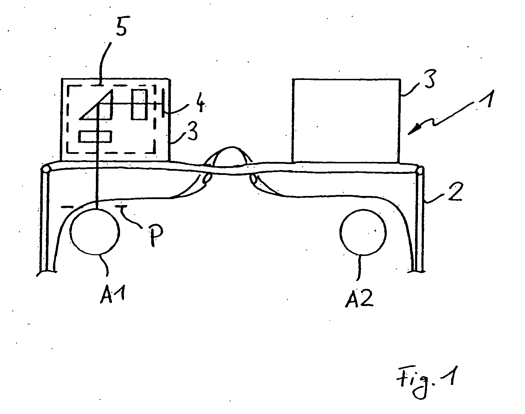

In Fig. 1 ist in einer schematischen Ansicht von oben auf einen Benutzer gezeigt, der die erfindungsgemäße HMD-Vorrichtung 1 auf dem Kopf trägt. Die HMD-Vorrichtung weist ein brillenartiges Gestell 2 auf, das sich auf der Nase des Benutzers sowie an beiden Ohren (nicht gezeigt) abstützt. Vor jedem Auge A1, A2 des Benutzers ist jeweils eine Bilderzeugungseinrichtung 3 am Gestell 2 befestigt. Die Bilderzeugungseinrichtung 3 umfaßt, wie in Fig. 1 für das linke Auge A1 gezeigt ist, ein Bildelement 4, das hier ein selbstleuchtendes Mikrodisplay ist, sowie eine Abbildungsoptik 5, mit der das mittels des Bildelements 4 erzeugte Bild so nach unendlich abgebildet wird, daß der Benutzer es mit seinem linken Auge A1 wahrnehmen kann. Dazu liegt die Austrittspupille P der Abbildungsoptik 5 in der Ebene der Pupille des Auges A1.

In Fig. 2 ist eine Ausführungsform der Bilderzeugungseinrichtung 3 detaillierter dargestellt. Dem Bildelement 4 sind in dieser Reihenfolge eine erste Optikgruppe 6, die eine erste Linse 7 mit negativer Brechkraft und eine zweite Linse 8 mit positiver Brechkraft aufweist, ein 90° Umlenkprisma 9 sowie eine zweite Optikgruppe 10, die eine Linse 11 umfaßt nachgeordnet. Bei der ersten Optikgruppe ist jeweils die dem Bildelement 4 zugewandte Seite der ersten und zweiten Linse 7 und 8 als asphärische Fläche ausgebildet und die der Austrittspupille P zugewandte Seite der dritten Linse 11 der zweiten Optikgruppe ist ebenfalls als asphärische Fläche ausgebildet. Diese asphärische Fläche ist ferner noch als diffraktive Fläche ausgestaltet, wobei die diffraktive Fläche ein Kinoform-Profil aufweist. Im Detail umfaßt die diffraktive Fläche konzentrische Ringe mit dem Linsenscheitel der der Austrittspupille zugewandten Fläche der dritten Linse als Mittelpunkt. Jeder Ring hat einen inneren und einen äußeren Radius. Der innere Radius des ersten Rings ist null. Der äußere Radius des m-ten Rings ist der innere Radius des m+1-ten Ringes. Die Breite der Ringe wird von der Mitte zum Rand der Linse kontinuierlich kleiner. Die Furchentiefe am inneren Radius ist null, am äußeren Radius beträgt sie d. Beim Übergang vom m-ten Ring auf den m+1-ten Ring ist somit eine Stufe der Höhe d vorhanden. Die diffraktive Fläche kann mit der nachfolgenden Phasenprofilfunktion $\varphi$ beschrieben werden:

$$\varphi = \frac{2\pi}{\lambda_0} \sum_n C_n r^{2n}$$

dabei steht $\lambda_0$ für die Referenzwellenlänge und $C_n$ sind die Koeffizienten des Phasenpolynoms. Der Radius r des m-ten Ringes berechnet sich aus

$$m\,\lambda_0 = \sum_n C_n r^{2n} \quad m = 1, 2, 3, \ldots$$

es gibt maximal N Ringe, wobei

$$N = \frac{1}{\lambda_0} \sum_n C_n r_{max}^{2n}$$

dabei steht $r_{max}$ für den halben Linsendurchmesser.

Die Furchentiefe d an jedem Ring beträgt

$$d = \frac{\lambda_0}{n_0 - 1},$$

wobei $n_0$ der Brechungsindex des Materials für $\lambda_0$ ist. Bei der hier beschriebenen Ausführungsform hat sich gezeigt, daß es ausreichend war, die diffraktive Fläche mit dem Koeffizienten $C_1$ zu beschreiben. Dieser ist in der nachfolgenden Tabelle 3 angegeben.

Die asphärischen Flächen werden mit der nachfolgenden Formel (Pfeilhöhenformel) beschrieben

$$z(h) = \frac{\rho h^2}{1 + \sqrt{1 - (1+K)\rho^2 h^2}} + Ah^4 + Bh^6 + Ch^8$$

z   Pfeilhöhe
K   Exzentrizität
p   Scheitelkrümmung

h        Höhe

A, B, C      Koeffizienten für Terme höherer Ordnung.

Der genaue optische Aufbau der Abbildungsoptik 5 läßt sich den nachfolgenden Tabellen 1 bis 4 entnehmen, wobei Tabelle 1 die Linsen und das Umlenkprisma beschreibt, in der Tabelle 2 die asphärischen Flächen und in Tabelle 3 die diffraktive Fläche genauer angegeben sind sowie Tabelle 4 die verwendeten Materialien (siehe Spalte "Material" von Tabelle 1) charakterisiert.

Tabelle 1:

| Fläche | Flächentyp | Radius [mm] | Dicke [mm] | Material |
|---|---|---|---|---|
| F0 | | unendlich | 5,105 | |
| F1 | asphärisch | -21,83491 | 1,000 | POLY |
| F2 | | 15,06187 | 5,103 | |
| F3 | asphärisch | 12,42723 | 3,500 | PMMA |
| F4 | | unendlich | 10,000 | PMMA |
| F5 | | unendlich | 10,000 | PMMA |
| F6 | | unendlich | 4,392 | PMMA |
| F7 | asphärisch, diffraktiv | -17,45877 | 15,400 | |
| F8 | | unendlich | | |

Tabelle 2:

| Fläche | K | A | B | C |
|---|---|---|---|---|
| F1 | 0,000000 | $0,413518 \times 10^{-3}$ | $-0.444924 \times 10^{-5}$ | $0,180870 \times 10^{-7}$ |
| F3 | 0,000000 | $-0,283785 \times 10^{-3}$ | $0,143310 \times 10^{-5}$ | $-0,853583 \times 10^{-8}$ |
| F7 | 0,000000 | $1,8706 \times 10^{-5}$ | $2,6274 \times 10^{-8}$ | |

Tabelle 3:

| Fläche | $C_1$ | $\lambda_0$ [nm] | Beugungsordnung | N | $R_1$ [mm] | $R_N$ [mm] | d [mm] |
|---|---|---|---|---|---|---|---|
| F7 | $-7,2250 \times 10^{-4}$ | 546,07 | 1 | 132 | 0,8694 | 9,9883 | 0,0011 |

Tabelle 4:

| Material | $n_d$ | $\nu_d$ | $\rho_1$ in g/cm³ |
|---|---|---|---|
| PMMA | 1,49178 | 57,99 | 1,19 |
| Poly | 1,59250 | 30,84 | 1,10 |

In Tabelle 4 bezeichnet $n_d$ die Brechzahl für 587,56 nm, $\nu_d$ ist die entsprechende Abbesche Zahl und $\rho_1$ ist die Dichte.

Bei der in Fig. 2 gezeigten Ausführungsform sind die zweite und dritte Linse 8, 11 auf das Umlenkprisma 9 aufgekittet. Dies bringt den Vorteil mit sich, daß der Justieraufwand bei der Fertigung der Abbildungsoptik 5 reduziert werden kann. Die gezeigte Abbildungsoptik weist somit lediglich (genau) drei Linsen auf und gewährleistet dabei eine ausgezeichnete Abbildungsqualität bei einer Austrittspupille mit einem Durchmesser von 10mm und einem Abstand der Austrittspupille vom letzten Linsenscheitel der dritten Linse 11 von ca. 15 mm.

Die erste Optikgruppe dient zur Korrektur von Astigmatismus und Verzeichnung sowie zur Korrektur des Farbquerfehlers. Die zweite Optikgruppe, insbesondere die asphärisch diffraktive Fläche F7 der dritten Linse 11 dient zur Korrektur des Farblängsfehlers und des Öffnungsfehlers.

Bei der Ausführungsform von Fig. 2 wie auch bei allen nachfolgenden Ausführungsformen sind die Optikgruppen so ausgebildet, daß, wenn man die Brennweite der Abbildungsoptik 5 mit f, die Brennweite der ersten Linse 7 mit $f_1$ und die Brennweite der zweiten Linse mit $f_2$ bezeichnet, folgende Beziehungen gelten: $-1,2\,f < f_1 < -0,3\,f$ und $0,6\,f < f_2 < 1,5\,f$. Die zweite Optikgruppe weist eine positive Brennweite auf, wobei, wenn man die Brennweite der zweiten Optikgruppe mit $f_3$ bezeichnet, folgende Beziehung gilt: $0,6\,f < f_3 < 1,7\,f$. Bezüglich der Baulänge L der Abbildungsoptik vom Bildelement 4 bis zur Austrittspupille P (entlang der optischen Achse) gelten folgende Beziehungen, wenn die Baulänge von dem Bildelement 4 bis zum Scheitel des Umlenkelements 9 mit $L_1$ und die Baulänge vom Scheitel des Umlenkelements 9 bis zur Austrittspupille P mit $L_2$ bezeichnet wird: $0,6\,f < L_1 < 1,2\,f$, und $0,8\,f < L_2 < 1,5\,f$ und $1,2\,f < L < 2,6\,f$.

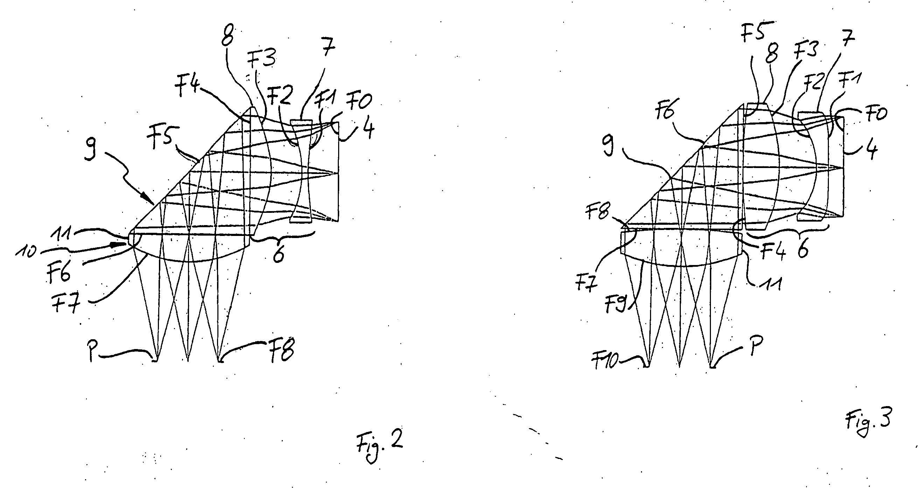

In Fig. 3 ist eine weitere Ausführungsform der Abbildungsoptik 5 gezeigt, wobei sich diese Ausführungsform von der in Fig. 2 gezeigten Ausführungsform darin unterscheidet, daß die zweite Linse 8 und die dritte Linse 11 gleich ausgebildet sind. Damit kann die Anzahl der verschiedenen Linsen reduziert werden, wodurch Kostenersparnisse bei der Herstellung realisierbar sind. Der genaue Aufbau der Abbildungsoptik 5 kann den nachfolgenden Tabellen 5 bis 7 entnommen werden, die in gleicher Weise wie die Tabellen 1 bis 3 aufgebaut sind.

Tabelle 5:

| Fläche | Flächentyp | Radius [mm] | Dicke [mm] | Material |
|--------|------------|-------------|------------|----------|
| F0 | | unendlich | 2,500 | |
| F1 | asphärisch | 116,51036 | 2,000 | POLY |
| F2 | | 10,54987 | 6,182 | |
| F3 | asphärisch | 21,50099 | 6,000 | PMMA |
| F4 | diffraktiv | -87,52364 | 0,050 | |
| F5 | | unendlich | 10,000 | PMMA |
| F6 | | unendlich | 10,000 | PMMA |
| F7 | | unendlich | 0,050 | |
| F8 | diffraktiv | 87,52364 | 6,000 | PMMA |
| F9 | asphärisch | -21,50099 | 15,400 | |
| F10 | | unendlich | | |

Tabelle 6:

| Fläche | K | A | B | C |
|--------|---|---|---|---|
| F1 | 0,000000 | $-0,166684 \times 10^{-3}$ | $0,569945 \times 10^{-5}$ | $-0,158203 \times 10^{-7}$ |
| F3 | 0,000000 | $-0,193234 \times 10^{-4}$ | $0,365953 \times 10^{-7}$ | $-0,249374 \times 10^{-9}$ |
| F9 | 0,000000 | $0,193234 \times 10^{-4}$ | $-0,365953 \times 10^{-7}$ | $0,249374 \times 10^{-9}$ |

Tabelle 7:

| Fläche | $C_1$ | $\lambda_0$ [nm] | Beugungsordnung | N | $R_1$ [mm] | $R_N$ [mm] | d [mm] |
|--------|-------|------------------|-----------------|---|-----------|-----------|--------|
| F4 | $-5,3441 \times 10^{-4}$ | 546,07 | 1 | 97 | 1,0108 | 9,9558 | 0,0011 |
| F8 | $-5,3441 \times 10^{-4}$ | 546,07 | 1 | 97 | 1,0108 | 9,9558 | 0,0011 |

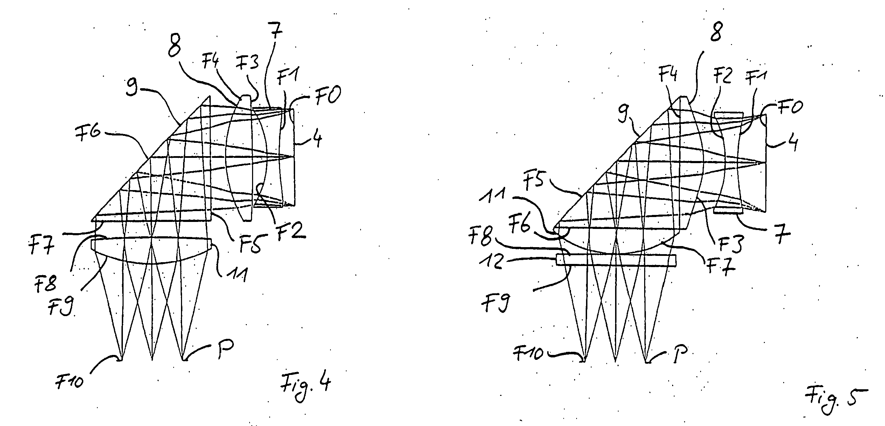

In Fig. 4 ist eine weitere Ausführungsform der Abbildungsoptik 5 dargestellt, bei der wiederum die zweite. Linse 8 und die dritte Linse 11 gleich ausgebildet sind. Im Unterschied zu der zuvor beschriebenen Ausführungsform 3 sind die beiden Linsen 8 und 11 in axialer Richtung nur zueinander verschoben und nicht zueinander gespiegelt angeordnet, wie dies bei der Ausführungsform von Fig. 3 der Fall ist. Ferner ist die diffraktive Fläche, in gleicher Weise wie bei der Ausführungsform von Fig. 3, auf der asphärischen Seite der zweiten und dritten Linse 8 und 11 ausgebildet. Der genaue Aufbau der in Fig. 4 gezeigten Abbildungsoptik kann den nachfolgenden Tabellen 8 bis 10 entnommen werden.

Tabelle 8:

| Fläche | Flächentyp | Radius [mm] | Dicke [mm] | Material |
|---|---|---|---|---|
| F0 | | unendlich | 2,500 | |
| F1 | asphärisch | -40,79614 | 2,000 | POLY |
| F2 | | 14,16909 | 2,430 | |
| F3 | diffraktiv | 175,49822 | 4,500 | PMMA |
| F4 | asphärisch | -18,25355 | 2,467 | |
| F5 | | unendlich | 10,000 | PMMA |
| F6 | | unendlich | 10,000 | PMMA |
| F7 | | unendlich | 2,467 | |
| F8 | diffraktiv | 175,49822 | 4,500 | PMMA |
| F9 | asphärisch | -18,25355 | 15,400 | |
| F10 | | unendlich | | |

Tabelle 9:

| Fläche | K | A | B | C |
|---|---|---|---|---|
| F1 | 0,000000 | $-0,524123 \times 10^{-4}$ | $0,134643 \times 10^{-5}$ | $0,131270 \times 10^{-7}$ |
| F4 | 0,000000 | $0,135894 \times 10^{-4}$ | $0,172391 \times 10^{-7}$ | $0,953240 \times 10^{-10}$ |
| F9 | 0,000000 | $0,135894 \times 10^{-4}$ | $0,172391 \times 10^{-7}$ | $0,953240 \times 10^{-10}$ |

Tabelle 10:

| Fläche | $C_1$ | $\lambda_0$ [nm] | Beugungsordnung | N | $R_1$ [mm] | $R_N$ [mm] | d [mm] |
|---|---|---|---|---|---|---|---|
| F3 | $-6,3237 \times 10^{-4}$ | 546,07 | 1 | 115 | 0,9293 | 9,9653 | 0,0011 |
| F8 | $-6,3237 \times 10^{-4}$ | 546,07 | 1 | 115 | 0,9293 | 9,9653 | 0,0011 |

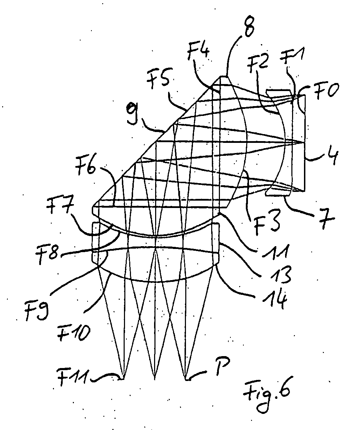

In Fig. 5 ist eine weitere Ausführungsform der Abbildungsoptik 5 gezeigt, wobei in diesem Fall im Unterschied zu den bisher beschriebenen Ausführungsformen die diffraktive Fläche auf einer Seite einer planparallelen Platte 12 ausgebildet ist. Die planparallele Platte 12 ist zwischen der Austrittspupille P und der dritten Linse 11 der zweiten Optikgruppe 10 angeordnet und die diffraktive Fläche ist auf der der Austrittspupille P abgewandten Seite vorgesehen. Die zweite und dritte Linse sind wiederum mit dem Umlenkprisma 9 verkittet. Der genaue Aufbau der Abbildungsoptik von Fig. 5 kann in den nachfolgenden Tabellen 11 bis 13 entnommen werden.

Tabelle 11:

| Fläche | Flächentyp | Radius [mm] | Dicke [mm] | Material |
|---|---|---|---|---|
| F0 | | unendlich | 4,801 | |
| F1 | asphärisch | -20,66602 | 2,000 | POLY |
| F2 | | 15,52092 | 3,647 | |
| F3 | asphärisch | 11,89860 | 4,000 | PMMA |
| F4 | | unendlich | 10,500 | PMMA |
| F5 | | unendlich | 10,500 | PMMA |
| F6 | | unendlich | 4,000 | PMMA |

(fortgesetzt)

| Fläche | Flächentyp | Radius [mm] | Dicke [mm] | Material |
|---|---|---|---|---|
| F7 | asphärisch | -16,47305 | 0,100 | |
| F8 | diffraktiv | unendlich | 2,000 | PMMA |
| F9 | | unendlich | 15,400 | |
| F10 | | unendlich | | |

Tabelle 12:

| Fläche | K | A | B | C |
|---|---|---|---|---|
| F1 | 0,000000 | $0,285342 \times 10^{-3}$ | $-0,213141 \times 10^{-5}$ | $-0,159420 \times 10^{-8}$ |
| F3 | 0,000000 | $-0,329219 \times 10^{-3}$ | $0,136724 \times 10^{-5}$ | $-0,838928 \times 10^{-8}$ |
| F7 | 0,000000 | $0,210164 \times 10^{-4}$ | $-0,264857 \times 10^{-7}$ | $0,421168 \times 10^{-9}$ |

Tabelle 13:

| Fläche | $C_1$ | $\lambda_0$ [mm] | Beugungsordnung | N | $R_1$ [mm] | $R_N$ [mm] | d [mm] |
|---|---|---|---|---|---|---|---|
| F8 | $-7,3399 \times 10^{-4}$ | 546,07 | 1 | 134 | 0,8625 | 9,9846 | 0,0011 |

In Fig. 6 ist eine weitere Ausführungsform der erfindungsgemäßen Abbildungsoptik gezeigt, wobei sich diese Ausführungsform von den bisher beschriebenen Ausführungsformen darin unterscheidet, daß in der zweiten Optikgruppe 10 keine diffraktive Fläche vorgesehen ist, sondern eine achromatisierend wirkende Kittgruppe aus zwei Linsen 13 und 14. Mittels dieser Kittgruppe wird der Farblängsfehler korrigiert.

Der genaue Aufbau der Abbildungsoptik ergibt sich aus den nachfolgenden Tabellen 14 und 15.

Tabelle 14:

| Fläche | Flächentyp | Radius [mm] | Dicke [mm] | Material |
|---|---|---|---|---|
| F0 | | unendlich | 2,100 | |
| F1 | asphärisch | 47,42856 | 1,200 | POLY |
| F2 | | 11,62924 | 6,300 | |
| F3 | asphärisch | 14,46313 | 4,500 | PMMA |
| F4 | | unendlich | 10,500 | PMMA |
| F5 | | unendlich | 10,500 | PMMA |
| F6 | | unendlich | 4,500 | PMMA |
| F7 | asphärisch | -14,46313 | 0,300 | |
| F8 | | -19,91802 | 1,500 | POLY |
| F9 | | 54,24851 | 5,819 | PMMA |
| F10 | asphärisch | -19,77272 | 15,506 | |
| F11 | | unendlich | | |

Tabelle 15:

| Fläche | K | A | B | C |
|---|---|---|---|---|
| F1 | 0,000000 | $-0,587358 \times 10^{-3}$ | $0,956533 \times 10^{-5}$ | $-0,300550 \times 10^{-7}$ |

(fortgesetzt)

| Fläche | K | A | B | C |
|---|---|---|---|---|
| F3 | 0,000000 | -0,100975 x 10$^{-3}$ | 0,150265 x 10$^{-6}$ | -0,117337 x 10$^{-8}$ |
| F7 | 0,000000 | 0,100975 x 10$^{-3}$ | -0,150265 x 10$^{-6}$ | 0,117337 x 10$^{-8}$ |
| F10 | 0,000000 | -0,417928 x 10$^{-4}$ | 0,195818 x 10$^{-6}$ | -0,435578 x 10$^{-9}$ |

**Patentansprüche**

1. Head Mounted Display Vorrichtung (HMD-Vorrichtung) mit einem Bildelement (4) zum Erzeugen eines Bildes und einer Abbildungsoptik (5), die das Bild so abbildet, daß es von einem die HMD-Vorrichtung tragenden Benutzer wahrnehmbar ist, wobei die Abbildungsoptik (5) eine erste Optikgruppe (6) mit einer ersten Linse (7), die negative Brechkraft aufweist, und einer zweiten Linse (8), die positive Brechkraft aufweist, ein der ersten Optikgruppe (6) nachgeordnetes Umlenkelement (9) sowie eine dem Umlenkelement (9) folgende zweite Optikgruppe (10) mit einer dritten Linse (11) umfaßt, **dadurch gekennzeichnet, daß** zur Korrektur von Astigmatismus und Verzeichnung mindestens eine Fläche (F1, F2, F3, F4) der Flächen der ersten und zweiten Linse (7, 8) asphärisch ausgebildet ist und zur Korrektur des Öffnungsfehlers mindestens eine Fläche (F6, F7) der dritten Linse (11) asphärisch ausgebildet ist.

2. HMD-Vorrichtung nach Anspruch 1, **dadurch gekennzeichnet, daß** zur Korrektur der Bildfeldkrümmung die erste Linse (7) näher an einer Bildebene, in der das erzeugte Bild liegt, ist als die zweite Linse (8) und ferner näher an der Bildebene liegt als am Umlenkelement (9).

3. HMD-Vorrichtung nach einem der obigen Ansprüche, **dadurch gekennzeichnet, daß** zur Korrektur des Farbquerfehlers das Material der ersten Linse (7) eine höhere Dispersion aufweist als das Material der zweiten Linse (8).

4. HMD-Vorrichtung nach einem der obigen Ansprüche, **dadurch gekennzeichnet, daß** zur Korrektur des Farblängsfehlers die zweite Optikgruppe (10) eine diffraktive Fläche aufweist und/oder einen Achromaten.

5. HMD-Vorrichtung nach Anspruch 4, **dadurch gekennzeichnet, daß** die diffraktive Fläche auf der asphärischen Fläche der dritten Linse (11) ausgebildet ist.

6. HMD-Vorrichtung nach Anspruch 4, **dadurch gekennzeichnet, daß** die diffraktive Fläche als Planfläche ausgebildet ist.

7. HMD-Vorrichtung nach einem der obigen Ansprüche, **dadurch gekennzeichnet, daß** zur Korrektur von Astigmatismus und Verzeichnung eine Fläche der ersten Linse (7) und eine Fläche der zweiten Linse (8) asphärisch ausgebildet ist.

8. HMD-Vorrichtung nach einem der obigen Ansprüche, **dadurch gekennzeichnet, daß** die zweite (8) und dritte Linse (11) identisch ausgebildet sind.

9. HMD-Vorrichtung nach einem der obigen Ansprüche, **dadurch gekennzeichnet, daß** das Umlenkelement (9) eine Faltung des Strahlengangs mittels einer einzigen Reflexion um 70° - 110°, bevorzugt 90° bewirkt.

10. HMD-Vorrichtung nach einem der obigen Ansprüche, **dadurch gekennzeichnet, daß** alle optischen Flächen der beiden Optikgruppen (6, 10) rotationssymmetrisch und bezüglich der optischen Achse der Abbildungsoptik zentriert sind.

**Claims**

1. A Head Mounted Display device (HMD device) comprising an image element (4) for generating an image and imaging optics (5) projecting the image such that it is perceivable by a user wearing said HMD device, wherein said imaging optics (5) comprise a first optical group (6) including a first lens (7), which has negative refractive power, and a second lens (8), which has positive refractive power, a deflecting element (9) arranged following the first optical group (6), as well as a second optical group (10) following the deflecting element (9), said second optical group comprising a third lens (11), **characterised in that**, for correction of astigmatism and distortion, at least one surface (F1, F2, F3, F4) of the surfaces of the first and second lenses (7, 8) is aspheric and, for correction of the spherical aberration, at least one surface (F6, F7) of the third lens (11) is aspheric.

2. HMD device according to claim 1, **characterised in that**, for correction of the field curvature, the first lens (7) is located closer to an image plane in which the generated image lies than is the second lens (8) and is further located closer to said image plane than to the deflection element (9).

3. HMD device according to any one of the above claims, **characterised in that**, for correction of the transverse chromatic aberration, the material of the first lens (7) has a higher dispersion than the material of the second lens (8).

4. HMD device according to any one of the above claims, **characterised in that**, for correction of the longitudinal chromatic aberration, the second optical group (10) comprises a diffractive surface and/or an achromat.

5. HMD device according to claim 4, **characterised in that** the diffractive surface is provided on the aspheric surface of the third lens (11).

6. HMD device according to claim 4, **characterised in that** the diffractive surface is provided as a planar surface.

7. HMD device according to any one of the above claims, **characterised in that**, for correction of astigmatism and distortion, one surface of the first lens (7) and one surface of the second lens (8) is aspherically designed.

8. HMD device according to any one of the above claims, **characterised in that** the second lens (8) and the third lens (11) are identically designed.

9. HMD device according to any one of the above claims, **characterised in that** the deflecting element (9) causes folding of the optical path about 70° - 110°, preferably 90°, by one single reflection.

10. HMD device according to any one of the above claims, **characterised in that** all optical surfaces of the two optical groups (6, 10) have rotational symmetry and are centered with regard to the optical axis of the imaging optics.

**Revendications**

1. Dispositif Head Mounted Display (dispositif HMD) comprenant un élément d'image (4) pour générer une image et une optique de reproduction (5), qui reproduit l'image de telle sorte qu'elle peut être perçue par un utilisateur portant le dispositif HMD, l'optique de reproduction (5) comprenant un premier groupe optique (6) avec une première lentille (7), qui présente un pouvoir réfringent négatif, et une seconde lentille (8), qui présente un pouvoir réfringent positif, un élément de déviation (9) placé en aval du premier groupe optique (6) et un second groupe optique (10) suivant l'élément de déviation (9) avec une troisième lentille (11), **caractérisé en ce que**, pour la correction de l'astigmatisme et de la distorsion d'image, au moins une surface (F1, F2, F3, F4) des surfaces de la première et de la seconde lentilles (7, 8) est conçue de façon asphérique et, pour la correction de l'erreur d'ouverture, au moins une surface (F6, F7) de la troisième lentille (11) est conçue asphérique.

2. Dispositif HMD selon la revendication 1 **caractérisé en ce que**, pour la correction de la courbure du champ visuel, la première lentille (7) est plus près d'un plan d'image, dans laquelle l'image est générée que la seconde lentille (8) et plus près du plan d'image que de l'élément de déviation (9).

3. Dispositif HMD selon l'une quelconque des revendications précédentes, **caractérisé en ce que**, pour la correction de l'aberration chromatique latérale, le matériau de la première lentille (7) présente une dispersion plus grande que le matériau de la seconde lentille (8).

4. Dispositif HDM selon l'une quelconque des revendications précédentes, **caractérisé en ce que**, pour la correction de l'aberration chromatique latérale, le second groupe optique (10) présente une surface diffractive et/ou une lentille achromatique.

5. Dispositif HMD selon la revendication 4, **caractérisé en ce que** la surface diffractive est réalisée sur la surface asphérique de la troisième lentille (11).

6. Dispositif HMD selon la revendication 4, **caractérisé en ce que** la surface diffractive est réalisée comme surface plane.

7. Dispositif HMD selon l'une quelconque des revendications précédentes, **caractérisé en ce que**, pour la correction de l'astigmatisme et de la distorsion d'image, une surface de la première lentille (7) et une surface de la seconde lentille (8) sont conçues asphériques.

8. Dispositif HMD selon l'une quelconque des revendications précédentes, **caractérisé en ce que** la seconde lentille (8) et la troisième lentille (11) sont conçues identiques.

9. Dispositif HMD selon l'une quelconque des revendications précédentes, **caractérisé en ce que** l'élément de déviation (9) entraîne une convolution de la trajectoire de faisceau au moyen une unique réflection de 70° à 110°, de préférence 90°.

10. Dispositif HMD selon l'une quelconque des revendications précédentes, **caractérisé en ce que** toutes les surfaces optiques des deux groupes optiques (6, 10) sont à symétrie de révolution et sont centrés par rapport à l'axe optique de l'optique de reproduction.

Fig. 1

Fig. 3

Fig. 2

Fig. 4

Fig. 5

EP 1 513 000 B1

Fig.6